(19)

Europäisches
Patentamt
European
Patent Office
Office européen
des brevets

(11)  **EP 2 458 673 A2**

(12)  **EUROPEAN PATENT APPLICATION**

(43) Date of publication:
**30.05.2012   Bulletin 2012/22**

(51) Int Cl.:
***H01Q 1/22*** *(2006.01)*

(21) Application number: **11182180.7**

(22) Date of filing: **21.09.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority:  **30.09.2010   US 388462 P**

(71) Applicant: **ASSA ABLOY AB**
**107 23 Stockholm (SE)**

(72) Inventors:
 • **PIRCH, Hans-Jurgen**
  **4020 Linz (AT)**
 • **SANDA, David**
  **7 Praha (CZ)**

(74) Representative: **Grosfillier, Philippe**
  **Andre Roland S.A.**
  **Avenue Tissot 15**
  **P.O. Box 1255**
  **1001 Lausanne (CH)**

(54)   **Antenna calculation interface**

(57)   A reader is propsed that includes a reader core having a web server provided thereon. The web server is made accessible to users via an advertised IP address.

One set of scripts made available via the web server provide a user with the ability to optimize a tuning network for the reader.

*Fig. 1*

**Description**

**FIELD OF THE DISCLOSURE**

The present disclosure is generally directed toward RF communications and more specifically toward optimizing antenna designs for operating with readers.

**BACKGROUND**

Radio Frequency Identification (RFID) is a well established machine-readable technology used in many applications including physical access control and logical access control. Most access control systems utilize one or more RFID readers to read data from a population of RFID transponders and determine access privileges based on the data read from the RFID transponders.

Previous Original Equipment Manufacturer (OEM) RFID module products (*i.e.*, readers) have shown that the hardest part of the reader integration for the customer is the design of the reader antenna. While the customer is provided with the reader core, it is usually up to the customer to design their own antenna and then configure the reader to cooperate with the customer-designed antenna.

As can be appreciated, many customers do not have the expertise to optimize antenna designs and then configure the reader properly to cooperate with the antenna. Rather, customers must expend resources to pay trained installation personnel to perform these tasks that could potentially be performed by the customer. In an attempt to ameliorate these difficulties, some manufacturers provide a stock selection of antennas in various sizes and shapes but, this typically forces the customer to design his product to fit this stock antenna if possible.

Accordingly, difficulties in the reader integration process create a barrier to purchase. A reader which overcomes these barriers would receive increased customer satisfaction and marketability.

**SUMMARY**

It is, therefore, one aspect of the present disclosure to provide a solution to the above-described problem by providing reader core which includes an RF interface that is optimized for operation with tuned magnetic loop antennas having a predetermined inductance (*e.g.*, 50 Ohm). It is also an aspect of the present disclosure to make it as easy as possible for the customer to design such an antenna with tools provided on the reader platform. In particular, a reader core may be configured to offer an antenna calculation capability within a web interface, in addition to applicable application notes.

This provides the customer the advantage of not needing any expensive mathematics or simulation software, nor needing the knowledge to derive the necessary equations and write a calculation tool themselves.

In accordance with at least one embodiment of the present disclosure, a reader is provided that offers an antenna calculation tool itself and guides the customer through a simple process for optimizing the reader to operate with an antenna created by the customer. In some embodiments, all the customer needs to do is measure an inductance and resistance of their magnetic loop antenna with readily available low-cost equipment and enter the measured values into an antenna calculation tool provided within the reader which then calculates, based on the provided input, the necessary tuning network component values for the reader. In some embodiments, the reader may then automatically configure itself (*i.e.*, perform an auto-tuning function) to operate with the desired tuning network.

The present invention will be further understood from the drawings and the following detailed description. Although this description sets forth specific details, it is understood that certain embodiments of the invention may be practiced without these specific details. It is also understood that in some instances, well-known circuits, components and techniques have not been shown in detail in order to avoid obscuring the understanding of the invention.

**BRIEF DESCRIPTION OF THE DRAWINGS**

The present disclosure is described in conjunction with the appended figures:
Fig. 1 is a block diagram depicting an exemplary communication system in accordance with embodiments of the present disclosure;
Fig. 2 is a block diagram depicting an exemplary reader core in accordance with embodiments of the present disclosure;
Fig. 3 is a block diagram depicting an RF interface in accordance with embodiments of the present disclosure;
Fig. 4 is a block diagram depicting an RF interface with remote antenna in accordance with embodiments of the present disclosure;
Fig. 5 is a block diagram depicting a basic antenna tuning network in accordance with embodiments of the present disclosure;

Fig. 6 is a block diagram depicting a comparison of a single and double-ended antenna in accordance with embodiments of the present disclosure;

Fig. 7 is a diagram depicting antenna equivalent serial circuitry in accordance with embodiments of the present disclosure;

Fig. 8 is a block diagram depicting a full tuning network with antenna and parasitic capacitance in accordance with embodiments of the present disclosure;

Fig. 9 is a block diagram depicting a double-ended antenna tuning network in accordance with embodiments of the present disclosure;

Fig. 10 is a flow diagram depicting an exemplary antenna optimization method in accordance with embodiments of the present disclosure;

Fig. 11 is a flow diagram depicting an exemplary reader configuration method in accordance with embodiments of the present disclosure; and

Fig. 12 is an exemplary user interface enabling antenna optimization in accordance with embodiments of the present disclosure.

## DETAILED DESCRIPTION

The ensuing description provides embodiments only, and is not intended to limit the scope, applicability, or configuration of the claims. Rather, the ensuing description will provide those skilled in the art with an enabling description for implementing the described embodiments. It being understood that various changes may be made in the function and arrangement of elements without departing from the spirit and scope of the appended claims.

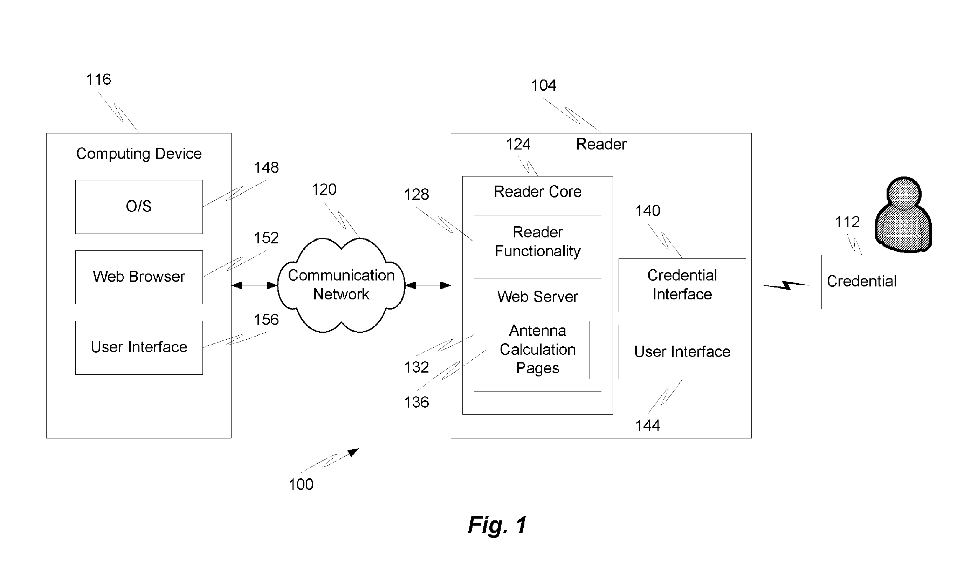

Fig. 1 shows an illustrative embodiment of a communication system 100. The system 100 may include a reader 104 that is configured to read and analyze credentials 112. In some embodiments, the reader 104 corresponds to an access control reader and the reader 104 is configured to secure one or more physical or logical assets unless a valid credential 112 is presented to the reader 104.

In some embodiments, the reader 104 comprises a credential interface 140 which enables the reader 104 to exchange commands and/or messages with the credential 112. In some embodiments, the credential interface 140 includes one or more of an antenna, an array of antennas, and/or a Near Field Communications (NFC) interface. As will be discussed in greater detail below, the credential interface 140 may correspond to a wireless communication interface which includes at least one antenna that enables the reader 104 to generate an RF field that energizes the credential 112 when the credential is within a predetermined range of the reader 104. In response to receiving RF energy from the reader 104, the credential 112 may generate one or more messages containing authentication data which are transmitted back to the reader 104. The reader 104 receives the messages via the credential interface 140 and utilizes reader functionality 128 within the reader core 124 to process the received messages. The reader 104 may be adapted to communicate with the credential 112 via contactless communication protocol. Examples of communication protocols employed by the reader 104 to communicate with a credential 112 include one or more known RF-based communications (e.g., ISO 14443A, ISO14443B, ISO 15693, NFC, Bluetooth, RUBEE, Zigbee, WiFi, and any other type of communication protocol that utilizes an RF field at 125kHz or 13.56MHz, for example) as well as other known or yet to be developed communication protocols. One exemplary type of credential interface 140 allows the reader 104 to exchange messages with the credential 112 using 13.56 MHz carrier waves.

The reader core 124 may correspond to a controller, processor, microprocessor, memory, Application Specific Integrated Circuit (ASIC), firmware, virtual machine, combinations thereof, and/or other hardware devices which enable the reader 104 to execute certain reader functions. In some embodiments, the reader functionality 124 comprises processor-executable instructions that, when executed by a processor, enable the reader 104 to exchange messages with the credential 112, analyze authentication data received from the credential 112, analyze any other inputs (*e.g.*, user inputs and/or biometric inputs) received at the reader 104, and determine if a holder of the credential 112 is entitled to gain access to the one or more assets secured by the reader 104.

In addition to the credential interface 140, the reader 104 may also be provided with a user interface 144. The user interface allows a user to interact directly with the reader 104. The user interface 144 may include one or more user inputs, one or more user outputs, or a combination user input/output. Exemplary user inputs include, without limitation, keypads, buttons, switches, microphones, fingerprint scanners, retinal scanners, cameras, and the like. Exemplary user outputs include, without limitation, lights, display screens (projection, LCD, LED array, plasma, *etc.*), individual LED, speakers, buzzers, etc. Exemplary combination user input/outputs may include a touch-screen interface or any other type of interface which is capable of simultaneously displaying a user output and receiving a user input.

In some embodiments, the credential interface 140 and user interface 144 are in communication with the reader core 124 and have the operations thereof controlled by the modules contained within the reader core 124.

In some embodiments, the communication system 100 may enable a customer to access a reader 104 via their computing device 116. In particular, the reader 104 may be configured to exchange one or more messages with the computing device 116 via a communication network 120. The communication network 120 may comprise any type of known communication network including wired and wireless or combinations of communication networks and may span long or small distances. The protocols used by the communication network 120 to facilitate computing device 116/reader 104 communications may include, but is not limited to, the TCP/IP protocol, Simple Network Management Protocol (SNMP), Power of Ethernet (POE), Wiegand Protocol, LON, BACNET, S-NET, HADP, OSDP, RS 232, RS 485, Current Loop, Bluetooth, Zigbee, GSM, SMS, WiFi, and combinations thereof. In some embodiments, the communication network 120 corresponds to a Wide Area Network (WAN), such as the Internet. In some embodiments, the communication network 120 corresponds to a Local Area Network (LAN) or a simple cable (e.g., Universal Serial Bus (USB) cable, Ethernet cable, etc.) which connects the reader 104 and computing device 116.

In some embodiments, the computing device 148 comprises an operating system 148, a web browser applicatoin 152, and a user interface 156. The operating system 148, in some embodiments, is a high-level application that facilitates interactions between various other applications stored on the computing device 116 and hardware components of the reader 104. Exemplary types of operating systems 148 include a Windows® operating system, a MAC OS operating system, a Linux operating system, or a virtual machine running a version thereof.

The user interface 156 represents one type of hardware component on the computing device 116. In some embodiments, the user interface 156 provides a user with the ability to view and interact with the various applications stored on the computing device 116. In particular, the user interface 156 enables the user to provide user inputs to the computing device 116 as well as view and/or hear user outputs generated by the operating system 148 and/or web browser application 152. Although an operating system 148 is depicted in Fig. 1, one skilled in the art will appreciate that the operating system 148 may not be necessary to execute the desired functions of the computing device 116. In particular, the web browser 152 may be dualpurposed to also act as the operating system of the computing device 116.

The web browser 152 enables the computing device 116 to interact with a web server 132 provided in the reader core 124. The web browser 152 may correspond to any type of known web browser application such as Internet Explorer, Firefox, Safari, Google Chrome, Opera, etc. The web browser 152 is configured to exchange messages with the web server 132 using a hypertext markup language (html), secured html, a file transfer protocol (FTP), or any other known protocol used to exchange web content between networked devices.

In accordance with at least some embodiments of the present disclosure, the web browser 152 enables a user of the computing device 116 to access one or more antenna calculation pages 136 provided by the web server 132. In some embodiments, the antenna calculation pages 136 describe methods of optimizing the credential interface 140 of the reader 104. More specifically, the antenna calculation pages 136 may provide detailed instructions which guide a user of the reader 104 in optimizing a tuning network of the credential interface 140 that interacts with an antenna of the credential interface 140. In some embodiments, the antennna calculation pages 136 provide the ability to automatically calculate optimal parameters of a tuning network that should be implemented at the reader 104 so as to accommodate the type and configuration of antenna that has been incorporated in the credential interface 140. Stated another way, the antenna calculation pages 136 may provide instructions for measuring certain properties of an antenna that is to be or has been incorporated into the credential interface 140, algorithms for calculating an optimal tuning network to operate in conjunction with the antenna that is to be or has been incorporated into the credential interface 140. The antenna calculation pages 136 may also provide richer content that enables a user to visually see how the antenna is to be configured in the credential interface 140, what values were assumed in optimizing the tuning network of the credential interface 140, and/or see an exemplary optimized tuning network and the parameters associated therewith. The antenna calculation pages 136 are intended to minimize the difficulty previously encountered by purchasers of readers 104 that are not necessarily capable of properly optimizing a tuning network of the credential inteface 140 on their own.

The antenna calculation pages 136 are useful to provide users with a quick and easy way of determinig an optimized tuning network for a reader and antenna. In some embodiments, the antenna calculation pages 136 are run in Java script or some other known web-development language. Moreover, the antenna calculation pages 136 may be configured to provide the reader functionality with information related to an optimized tuning network and the reader functionality 128 may comprise the ability to automatically tune the reader 104 based on calculations obtained via the antenna calculation pages 136. As one example, an auto-tuning reader 104 utilizing the various auto-tuning mechanisms described in U.S. Patent No. 7,439,860 to Andresky, the entire contents of which are hereby incoprated herein by reference, may be implemented by the reader functionality 128 based on inputs received from the execution of the antenna calculation pages 136.

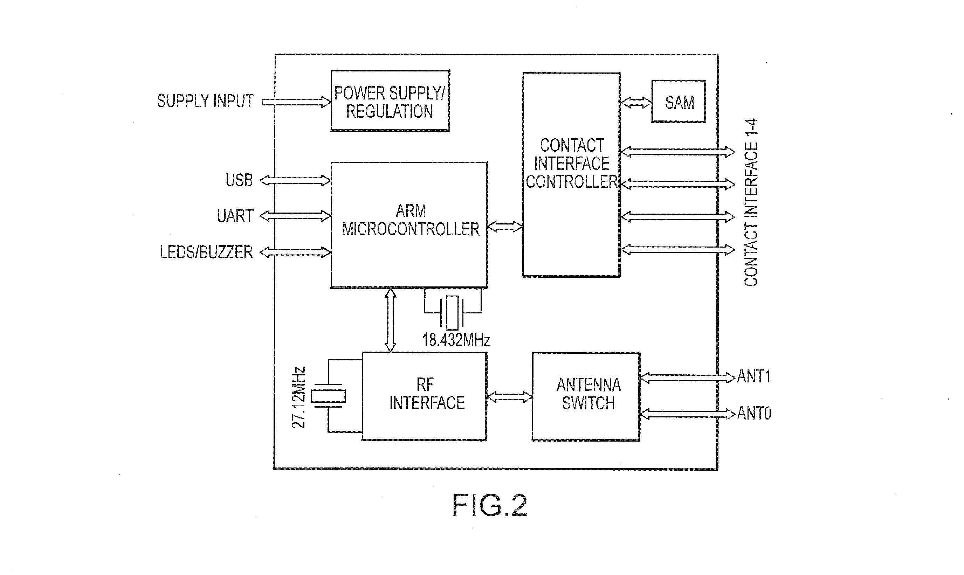

With reference now to Figs. 2-9 exemplary issues solved by the antenna calculation pages 136 will be described in accordance with at least some embodiments of the present disclosure. As noted above, the antenna calculation pages 136 may be provided to support RF design issues for the reader core 124. Fig. 2 depicts additional details of an exemplary reader core 124 that includes a microcontroller configured to interact with a USB port, UART port, and/or user interface 144. In some embodiments, an Ethernet connection may be established over the USB port.

The microcontroller may be in communication with a contact interface controller and RF interface (i.e., a portion of credential interface 140). The contact interface controller may have one or more I/O ports to one or more contact card interfaces. In some embodiments, one contact card interface is reserved for permanently populated SAMs as a tamper-proof key storage. Others of the contact card interfaces may be made available for general purpose use. All of the contact card interfaces may be fully compliant with ISO/IEC 7816-3 andor EMV2000 standards.

The RF interface may support one or more of ISO/IEC 14443 Type A standards, ISO/IEC 14443 Type B standards, ISO/IEC 15694 standards, HID iCLASS® standards where both ISO/IEC 14443 and ISO/IEC 15693 modes are supported, Sony FeliCa, and NFC.

The reader core 124 may also include a power supply/regulation component that provides power to the various other components of the reader 104 in a controlled manner. In some embodiments, the power regulator receives an external power supply (*e.g.*, USB bus powered, 3.3V, 5V, and high voltage inputs) and conditions the received power supply for use by the various components of the reader 104. In some embodiments, the power supply includes one or more batteries and/or capacitors which provide power to the components of the reader 104.

The RF interface may also be connected to an antenna switch which has two or more I/O ports thereby enabling the reader core 124 to connect with two or more different types of antennas. In some embodiments, the antenna switch comprises one or more of a booster circuit, an impedance matching circuit, a tuning circuit, and switches for connecting the RF interface to the antennas. In embodiments where multiple antennas are attached to the antenna switch, separate tuning circuits may be provided for each antenna. Accordingly, a first antenna may have a corresponding first tuning circuit between the antenna switch and the first antenna. Likewise, a second antenna may have a corresponding second tuning circuit between the antenna switch and the second antenna. Switching the antenna switch from a first state to a second state may enable the reader core 124 to switch between utilizing the first and second antennas. In some embodiments, more than two antennas may be connected to the reader core 124 though an antenna switch.

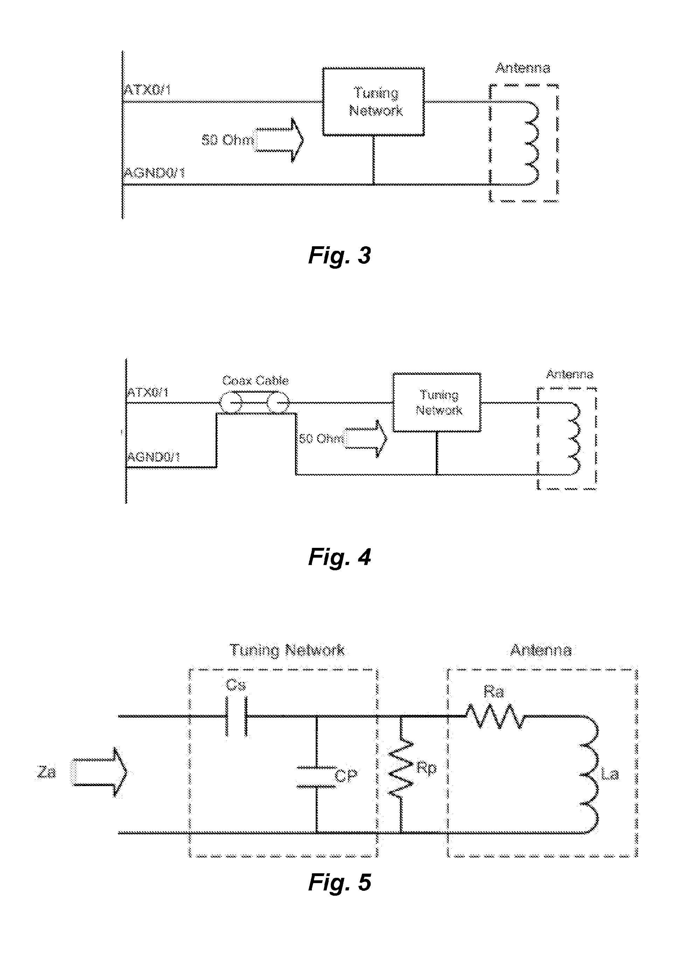

With reference now to Figs. 3-9, the following terms, abbreviations, and notations will be used in referring to the various antennas and tuning circuit configurations that are possible.

| Abbreviation | Description |
| --- | --- |
| BALUN | Balanced — Unbalanced |
| fc | Carrier frequency (13.56MHz) |
| Q-Factor | Quality factor |
| RF | Radio Frequency |
| SRF | Self Resonance Frequency |

| | |
| --- | --- |
| **X(Lx)** | $j2\pi \cdot fc \cdot Lx$ |
| **X(Cx)** | $\dfrac{1}{j2\pi \cdot fc \cdot Cx}$ |
| **A\|\|B** | $\dfrac{A+B}{A \cdot B}$ |
| ω | $2\pi \cdot fc$ |
| **Re(x)** | Real part of complex number x |
| **Im(x)** | Imaginary part of complex number x |

Embodiments of the present disclosure provide a reader core 124 that is capable of offering two single ended RF interfaces, which are optimized to work with 50Ω-tuned antennas, such as those depicted in Fig. 3. This makes the optimization process somewhat easier for the antenna calculation pages 136 to design remote antennas using 50Ω coaxial cables, such as can be seen in Fig. 4.

A simple antenna tuning network can be realized by invoking the antenna calculation pages 136 which selects two capacitor values for the tuning circuit (one series capacitor and one parallel capacitor) based on a measured resistance and inductance of the antenna to be connected to the reader core 124. Such an antenna tuning network is depicted in Fig. 5, where the following abbreviations are used:

Za      Antenna impendance

Cs     Serial Capacitor
Cp     Parallel Capacitor
Rp     Parallel damping resistor for Q-factor control
Ra     Serial antenna resistance
La     Antenna inductance

As can be appreciated by one of ordinary skill in the art, Cs and Cp may consist of several parallel capacitors to achieve better granularity and more accurate capacitance values in the tuning circuit.

In accordance with at least some embodiments of the present invention, when a user begins viewing the antenna calculation pages 136, the antenna calculation pages 136 take the user through an antenna design process which may contain one or more of the following steps:

(1) antenna design step; (2) antenna parameter measurement step where antenna resistance and inductance are measured by the user; (3) Q-factor calculation/determination of damping resistor; (4) tuning network calculation/ determination of serial and parallel capacitor values for the tuning network; and (5) fine tuning of the capacitors which may invlove iteratively re-performing one or more of steps 1-4.

Designing an antenna, such as a 13.56 MHz RFID antenna, usually involves a number of design and measurement iterations, primarily because there are some compromises to be made. In particular, a number of different variables and environmental factors have an effect on the antenna's performance. One such variable is antenna assembly shape and size.

The shape and size of the space avaialble for the whole antenna assembly should be determined as well as the actual regions in which the antenna conductors themselves will be placed. The space for the whole assembly is generally determined by the intended enclosure but the space for the antenna conductors is also influenced by the type of credential 112.

Because antennas for use at 13.56 MHz have a low inductance (*i.e.*, on the order of 1 uH), only a few turns are generally required in the loop and they may conveniently be made from tracks printed on a circuit board. Wire loops may also be used and these tend to be preferred for use at lower frequencies like 125 kHz. If the loop area of a printed circuit antenna needs to be maximized, the tracks may be stacked on board layers to as to produce a co-axial coil, rather than forming a single-layer co-planar spiral, which has a smaller equivalent area. In certain embodiments a reader 104 is enabled to operate with either a high frequency antenna or a low frequency antenna. In some embodiments, the reader 104 may be configured with an antenna array such as one of the antenna arrays disclosed and described in U.S. Patent No. 7,439,862 to Quan, the entire contents of which are hereby incorporated herein by reference. The comprimize is that multi-layer bards are more expensive and have higher parasitic capacitances of the antenna.

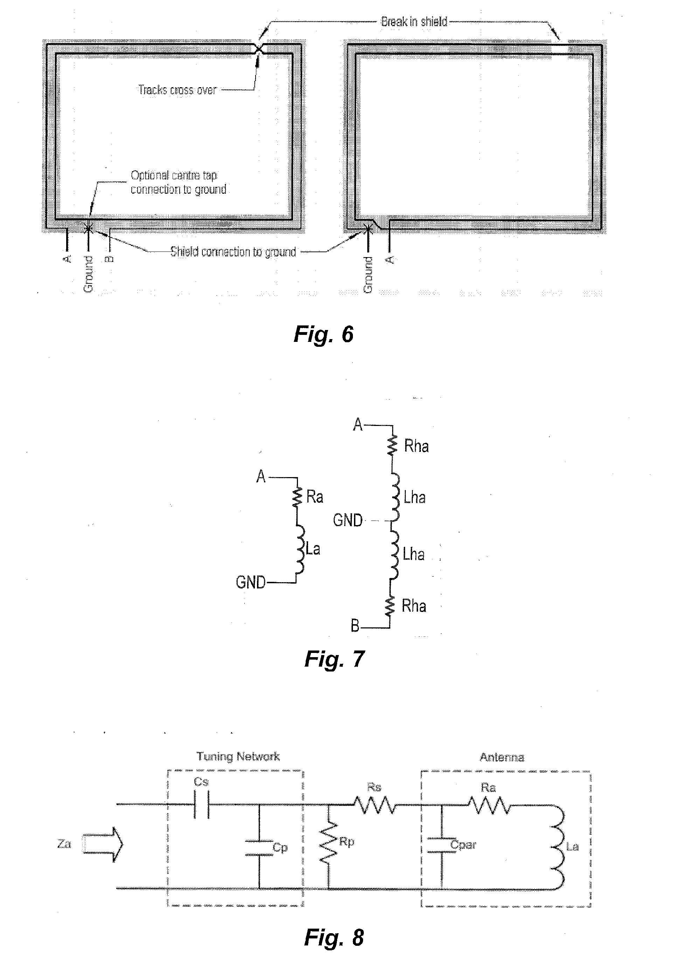

Another such variable is antenna construction, which may be dependent upon one or more of drive arrangement, existence of an e-shield, credential 112 characteristics, and environment (*e.g.*, whether metal objects are within the antenna's field, whether any wires pass through the antenna's field, and/or whether the antenna's field cuts across any printed circuit boards). With respect to drive arrangement, two possible drive arrangements (*i.e.*, a single-ended antenna and a double-ended antenna) are depicted side-by-side in Fig. 6. One skilled in the art will appreciate that antennas may be driven by single- or double-ended antennas and this determines the number of feed connections required. In the case of a single-ended antenna, one connection should be ground and this connection should also be kept short and of low impedance.

Double-ended antennas, on the other hand, have two identical end connections but may or may not have a center-tap connected to ground. The center-tap should be made at the true center of the conductor, measured along its length. If the antenna has an odd number of turns, then the center-tap must necessarily be at the opposite side from the feed connections. A grounded center-tap is optional and is used if this results in lower spurious radiated RF emissions. Whether or not the antenna is to be center-tapped, it is better if the two halves are made symmetrically by crossing the tracks over, so as to share inner and outer turns, because this shares the parasitic capacitances equally between the two sides of the antenna, thereby helping to reduce radiated emissions.

Still another important variable to consider in optimizing the tuning network is the parameters of the antenna, namely inductance and resistance of the antenna. Within the shape and size constraints imposed on the antenna, the only remaining variable is the number of turns, which ultimately determines final antenna inductance. In theory, an antenna of any inductance may be tuned, but there are practical limitations. High values of inductance (*e.g.*, greater than 2 uH) mean low values of tuning capacitance, which are easily swamped by parasitic effects and are, therefore, unreliable. Low values of inductance (*e.g.*, less than 1.5 uH) mean high values of tuning capacitance, which are easier to achieve. However, capacitors having a higher capacitance tend to have less-strict tolerances. In some embodiments, the capacitors choosen for the tuning network should be within plus or minus 2% or better of the stated capacitance value. Reader performance can tend to be affected by the reader's antenna inductance and the best choice is often in the range of 0.5 to 2.0 uH at 13.56 MHz.

Similar to inductance, resistace of a given antenna (as measured from end to end of the antenna) has an effect on the tuning network. Calculation of an antenna's resistance can be obtained with the following equation:

$$R = \frac{\rho \cdot l}{a}$$

where $\rho$ is the resistivity of the conductor, $l$ is the length of the conductor and $\alpha$ is the cross-sectional area. Resistance or an antenna can be actually measured by a customer or it may be computed according to the above-noted formula.

Quality factor, or Q-factor, is another variable which affects an antenna's performance and will influence the tuning network that is selected as optimal for the antenna. While tuning component values may be calculated using inductances and resistance formulaes described above, the values obtained thereby are seldom accurate enough for the final design of a tuning network. Furthermore, they do not take into account real-world second-order and environmental effects. While it is possible to optimize a tuning network with these calculations, it is generally not the most preferred method. Accordingly, the antenna calculation pages 136 take a user through a more preferred process whereby the actual inductance and resistance of the antenna is measured as follows.

As can be seen in Fig. 7, it is generally desirable to measure antenna parameters after the reader 104 has been installed (i.e., in situ). The parameters should be measured end-to-end, for both single- and double-ended antennas. For a single-ended antenna, measurement between connections A and ground provide the value of the inductance, La, and self-resistance, Ra, as expected. For the double-ended antenna, measurement should be made between connections A and B to give ht evalues La and Ra, rather than from A or B to ground. The reason is that while the resistances will sum correctly, the inductances do not. Such information can be provided from the antenna calculation pages 136 to the user.

In addition to inductance and resistance, a real antenna also has parasitic capacitance, Cpar, which affects the measured values of Ra and La. If the impedance measuring equipment uses a three-component model, then La, Ra and the parallel capacitance can be determined directly at the frequency at which the antenna will be used. If the equipment has a two-component model (e.g., inductance and series resistance), then it can be helpful to take measurements as several frequencies. For a 13.56 MHz reader, a measurement at a low frequency of around 100 kHz to 1 MHz will measure the inductance without too much effect from the parasitic capacitance. A second measurement at 13.56 MHz will give a better idea of the self-resistance, Ra, since the skin effect will then act. In some emboidments, the antenna calculation pages 136 queries the user as to whether they are using a two-component or three-component model to measure the parameters of the antenna. Depending upon the user's response, the appropriate antenna calculation pages 136 can be provided to the user to help them make accurate parameter measurements.

With respect to Q-factor, the antenna calculation pages 136 may be configured to either select a predetermined Q-factor value. Selection of a Q-factor value can be bounded based on modulation waveform fall times. In some embodiments, the antenna calculation pages 136 select a default Q-factor value of Q=30, which is nominal for ISO/IEC 14443 type A.

Generally, an external series or parallel damping resistor can be used to control the Q-factor of the antenna. If series resistance, Rs, is used, then the values will tend to be around 1 to 2 $\Omega$. It can be difficult to obtain the required value in this range, so a parallel resistance may be used instead. Here, the calculated valued tend to be in the low k $\Omega$ range and there is often more choice. Rp and Rs have an equivalent effect on the Q-factor; but a single parallel resistor is a simpler and cheaper option in most cases.

When the reader is operating in free air, all of the power delivered to the antenna from the driver will be dissipated in the damping resistors and appropriate power ratings should be chosen for these components. The following equation may be inverted to calculate Rp or Rs:

$$Q = \frac{2 \cdot \pi \cdot fc \cdot La \cdot Rp}{(2 \cdot \pi \cdot fc)^2 \cdot La^2 + (Rs + Ra) \cdot Rp}$$

In some embodiments of the present disclosure, the reader core 124 may be configured to be used with 50$\Omega$ tuned antennas. With a value for the antenna impedance, Za, given (50 $\Omega$), the antenna tuning components required to give this may be calculated. The schematic depicted in Fig. 8 shows the tuning network with the antenna shown in full with its self-resistance, Ra, and parasitic capacitance, Cpar.

For calculation purposes, Cpar may be ignored to a first order approximation because it is generally smaller (a few pF). In practice, when the parallel tuning capacitor, Cp, is calculated it can be considered to include Cpar and so the calculated value is generally high by a few pF. Ignoring Cpar here, the antenna impedance is calculated by the antenna calculation pages 136 with the following equation:

$$Za = X(Cs) + X(Cp) \| [Rp \| (X(La) + Ra + Rs)]$$

Where Rs is a resistance added in series with the antenna whilst Rp is added in parallel and Cp and Cs are the parallel and series tuning capacitors, respectively. The aim of the antenna calculation pages 136 is to choose Cp and Cs such that:

$$\mathrm{Re}(Za) = Zareq = 50 \qquad \text{and} \qquad \mathrm{Im}(Za) = 0$$

With Rp and Rs already fixed, the simultaneous equations can be solved for Cp according to the following:

$$Cp = \frac{1 - \sqrt{1 - [\frac{1}{Rp^2} + \frac{(Rs + Ra)^2}{\omega^2 \cdot La^2 \cdot Rp^2}] \cdot [\omega^2 \cdot La^2 \cdot (1 - \frac{Rp}{Zareq}) + (Rp + Rs + Ra)^2 - \frac{Rp \cdot (Rs + Ra)}{Zareq} \cdot (Rp + Rs + Ra)]}}{\omega^2 \cdot La + \frac{(Rs + Ra)^2}{La}}$$

And Cs according to the following:

$$Cs = \frac{(Rp + Rs + Ra - \omega^2 \cdot La \cdot Cp \cdot Rp)^2 + \omega^2 \cdot [La + Cp \cdot Rp \cdot (Rs + Ra)]^2}{\omega^2 \cdot Rp \cdot [La - \omega^2 \cdot La^2 \cdot Cp - Cp \cdot (Rs + Ra)^2]}$$

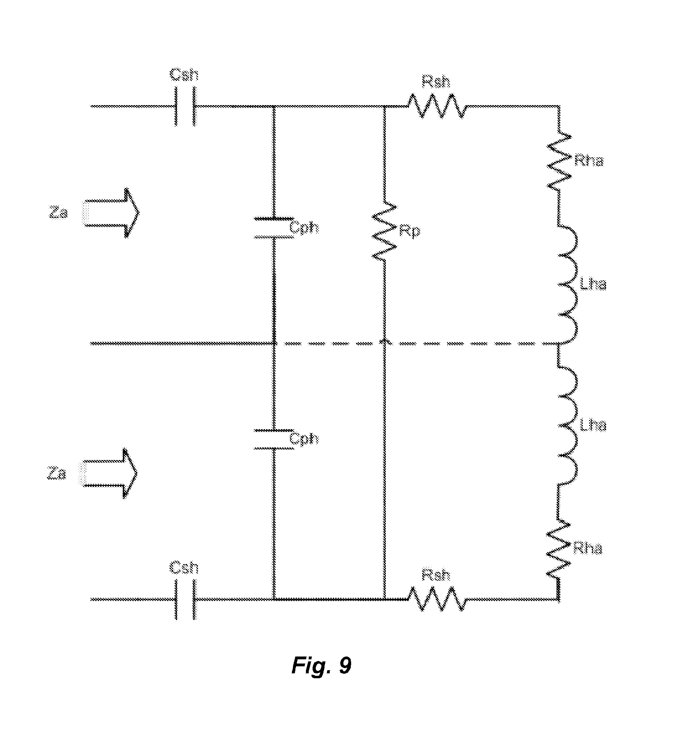

The above-described calculations for Cp and Cs in the tuning network have been made for a single-ended antenna. If a double-ended antenna with BALUN should be designed, then a simple transformation is applied at this point to arrive at the corresponding values depicted in Fig. 9.

The antenna's parameters can be measured across the whole antenna, La and Ra, but the calculation for the tuning capacitors Cp and Cs is made for an antenna impedance twice that required by the matching network (*i.e.*, Zareq = 2Za). It is useful to choose Zareq in a way that the load presented to the reader core 124 by the BALUN used is the predetermined load (*e.g.*, 50Ω).

A parallel damping resistor is usually connected across the whole antenna, so its value is the same. The series capacitor and the series damping resistor are invariable divided into two, one each side to preserve symmetry, so

$$Csh = 2Cs \qquad \text{and} \qquad Rsh = \frac{Rs}{2}$$

If the parallel capacitor is split into two halves, then Cph = 2Cp. But it should be noted that a single parallel capacitor across the whole antenna may be used instead and the antenna center-tap to ground connection is optional.

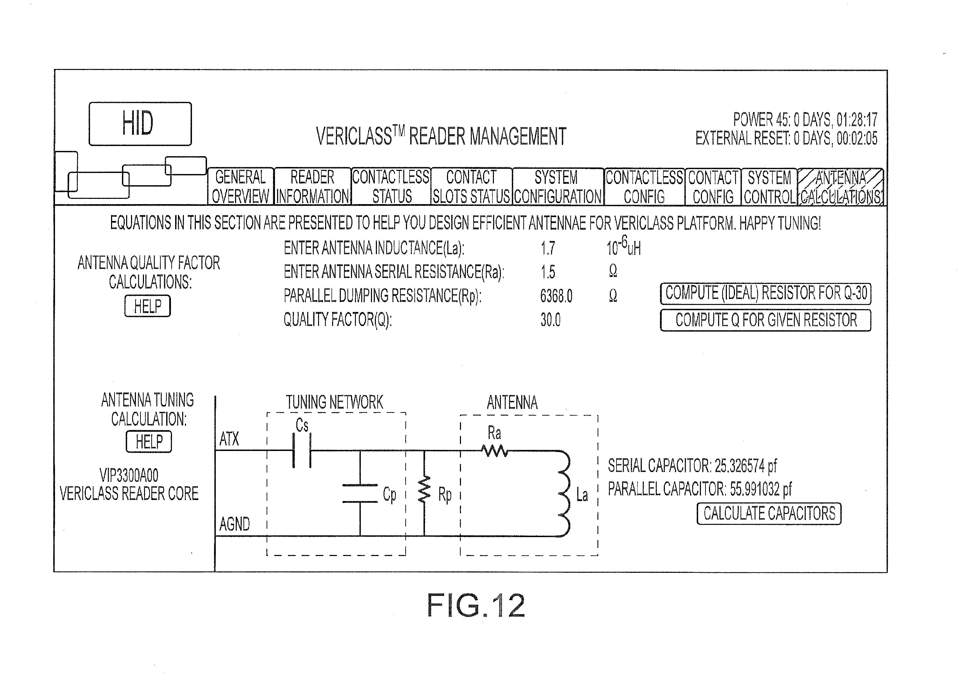

After the initial values of the tuning capacitors have been selected, then a fine tuning step may be executed by the antenna calculation pages 136. Calculated values of capacitors Cp, Cs (or their equivalents Cph, Csh) and Rs / Rp are generally within a few percent of the correct value, but these correct values can only be found by measurement and adjustment. The measurement and adjustment phase is the fine tuning step. In this step, the impedance Za may be measured using either an impedance meter or a network analyzer at 13.56 MHz. By dynamically adjusted Cs and Cp while Za is measured, the antenna impedance can be tuned to exactly to the predetermined impedance (*e.g.*, 50Ω). After the fine tuning step is complete, the antenna should be configured and the reader 104 should be reader for operation. Optimal tuning capacitance values may be provided to the user via the user interface 156 of the computing device 116. An exemplary screen-shot of a user interface is depicted in Fig. 12. As can be seen in Fig. 12, the user interface provided by the antenna calculation pages 136 includes instructions by measuring certain parameters of the antenna as well as the predetermined values (*e.g.*, Q-factor value, parallel dumping resistance, *etc.*) used as inputs to the equations discussed above. Once the user is done viewing the antenna calculation pages 136, the user may discontinue the session with the web server 132 and log out of the web browser 152.

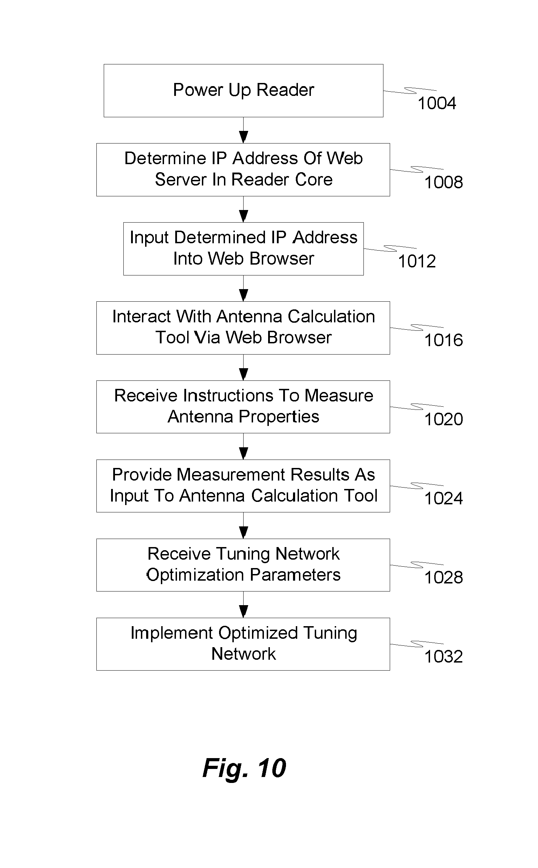

With reference now to Fig. 10, the method of optimizing a tuning network for a reader core 124 will be discussed in accordance with at least some embodiments of the present invention. The method begins when the reader 104 is powered up (step 1004) and connected to the communication network 120.

The method continues when a user desires to connect with the web server 132 in the reader 104 and determines an IP address of the web server 132 in the reader core 124 (step 1008). In some embodiments, the IP address of the web server 132 may correspond to a traditional IP address format (*e.g.*, xxx.xxx.xxx.xxx). Alternatively, the web server 132 may be reachable as *readername.local* from any application or from any web browser 152. The precise manner in which the web server 132 is accessed by the client device 116 may depend upon the type of operating system 148 running on the client device 116 as well as the type of werb browser 152 being used to access the web server 132.

In most instances, however, the user is allowed to access the web server 132 in the reader core 124 by inputting the determined IP address into the web browser 152 address bar (step 1012). This causes the client device 116 to send an html request to the web server 132. Upon receiving the html request, the web server 132 provides content from one or more of its web pages back to the client device 116 in an html response. The request and response exchange allows the user to eventually interact with the antenna calculation pages 136 via the web browser 152 (step 1016).

Once the user begins interacting with the antenna calculation pages 136, the user will eventually receive instructions to measure properties or parameters of an antenna that is desired to be connected to the reader platform 124 (*i.e.*, included in the credential interface 140) (step 1020). In some embodiments, the user is instructed to measure an impedance and resistance of the antenna across its entire length.

After the user has obtained the requested measurements, the user provides the measurement results to the antenna calculation pages 136 (step 1024). The antenna calculation pages 136 then take the receive inputs and determine parameters for an optimal tuning network. The determined parameters may be provided back to the user as another instance of the antenna calculation pages 136 (step 1028). Thereby allowing the user to implement the optimized tuning network (step 1032). In some embodiments, the method may continue with a fine-tuning step where the user performs additional measurements to fine tune the tuning network to account for tolerances in the capacitors and other variables. In some embodiments, the implementation of the optimized tuning network may be automated by utilizing an auto-tuning reader that can dynamically configure its tuning network accoridng to the parameters determined by the antenna calculation pages 136.

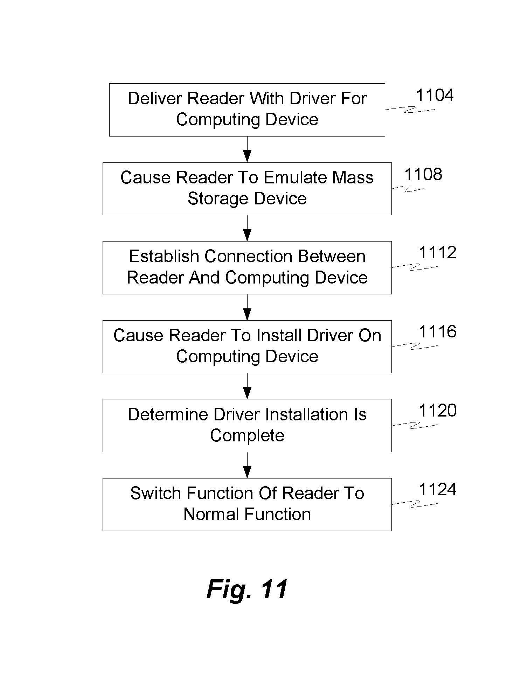

With reference now to Fig. 11, an exemplary reader configuration method will be described in accordance with at least some embodiments of the present invention. The method is initiated when a reader 104 is delivered to a customer (step 1104). The delivered reader 104 may comprise a driver that supports one or more functions related to enabling a user to access a web server 132 on the reader 104 with a computing device 116. In some embodiments, the driver is used to enable the reader 104 to connect with the web server 132 of the reader 104. Since this function is specific to the reader 104, it is most likely that the computing device 116 is not initially provisioned with the necessary driver. Accordingly, it becomes necessary to utilize the reader 104 to load the driver on the computing device 116 as a prerequisite to allowing the computing device 116 to access the web server 132.

One way of allowing the reader 104 to load its driver on the computing device 116 is to have the reader emulate a mass storage device (step 1108). This causes the reader 104 to automatically install the driver on any computing device to which it is connected for the first time (*i.e.*, when the computing device 116 does not have the necessary drivers to support communications with the reader 104 and, therefore, does not recognize the reader 104 the first time that it is connected to the computing device 116).

Accordingly, the method continues when a first-time connection is established between the reader 104 and the computing device 116 (step 1112). This connection may be established with a wired connection (*e.g.*, via a USB or Ethernet port) or a wireless connection (*e.g.*, via a Bluetooth connection). After the reader 104 has been connected with the computing device 116, the reader begins installing the driver on the computing device 116 because the reader 104 is acting as a mass storage device (something natively recognized by the computing device 116) instead of acting like a reader 104 (step 1116).

The connection is maintained until it is determined that the driver installation process is complete and the computing device 116 is not equipped with the driver(s) which enable it to recognize and communicate with the reader 104 (step 1120). Thereafter, the behavior of the reader 104 is switched from acting like a mass storage device to actually behaving like a reader 104. Thus, the next time the computing device 116 establishes a connection with the reader 104, the computing device 116 has the necesasry drivers to exchange communications with the reader 104 and is capable of immediately recognizing the reader 104 (step 1124). After this point, the reader 104 is allowed to operate in its normal fashion.

In the foregoing description, for the purposes of illustration, methods were described in a particular order. It should be appreciated that in alternate embodiments, the methods may be performed in a different order than that described. It should also be appreciated that the methods described above may be performed by hardware components or may be embodied in sequences of machine-executable instructions, which may be used to cause a machine, such as a general-purpose or special-purpose processor or logic circuits programmed with the instructions to perform the methods. These machine-executable instructions may be stored on one or more machine readable mediums, such as CD-ROMs or other type of optical disks, floppy diskettes, ROMs, RAMs, EPROMs, EEPROMs, magnetic or optical cards, flash memory, or other types of machine-readable mediums suitable for storing electronic instructions. Alternatively, the methods may be performed by a combination of hardware and software.

Specific details were given in the description to provide a thorough understanding of the embodiments. However, it will be understood by one of ordinary skill in the art that the embodiments may be practiced without these specific details. For example, circuits may be shown in block diagrams in order not to obscure the embodiments in unnecessary detail. In other instances, well-known circuits, processes, algorithms, structures, and techniques may be shown without unnecessary detail in order to avoid obscuring the embodiments.

Also, it is noted that the embodiments were described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed, but could have additional steps not included in the figure. A process may correspond to a method, a function, a procedure, a subroutine, a subprogram, etc. When a process corresponds to a function, its termination corresponds to a return of the function to the calling function or the main function.

Furthermore, embodiments may be implemented by hardware, software, firmware, middleware, microcode, hardware description languages, or any combination thereof. When implemented in software, firmware, middleware or microcode, the program code or code segments to perform the necessary tasks may be stored in a machine readable medium such as storage medium. A processor(s) may perform the necessary tasks. A code segment may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

While illustrative embodiments of the disclosure have been described in detail herein, it is to be understood that the inventive concepts may be otherwise variously embodied and employed, and that the appended claims are intended to be construed to include such variations, except as limited by the prior art.

**Claims**

1. A method, comprising:

   determining an IP address of a web server contained within a reader core of a reader;
   entering the determined IP address into a web browser of a computing device;
   obtaining, from the web server, at least one antenna calculation web page, the at least one antenna calculation web page comprising instructions, directions, and/or formulas for determining a tuning capacitance value for use with the reader; and
   rendering the at least one antenna formula web page on a user interface of the computing device.

2. The method of claim 1, further comprising:

   receiving instructions to measure at least one parameter of an antenna to be included in a credential interface of the reader; and
   providing a measurement of the at least one parameter as an input to the at least one antenna calculation web page, wherein the at least one antenna calculation web page uses the measurement to determine the tuning capacitance value; and
   rendering the at least one antenna formula web page on a user interface of the computing device with values calculated by the formula represented on the antenna calculations web page.

3. The method of claim 2, wherein the tuning capacitance value correlates to an antenna having a predetermined inductance and wherein the tuning capacitance value include both a capacitance value for a series tuning capacitor and a capacitance value for a parallel tuning capacitor.

**4.** The method of claim 1, further comprising:

configuring the reader to emulate a mass storage device a first time that a communication link is established between the reader and computing device;
causing the reader to install a driver on the computing device which enables the computing device to access the web server via the web browser;
determining that the driver has been successfully installed on the computing device; and
in response to determining that the driver has been successfully installed, altering a behavior of the reader to no longer emulate a mass storage device.

**5.** A computer-readable medium comprising processor-executable instructions that, when executed by a processor of the terminal, perform the method of claim 1.

**6.** An RFID reader, comprising:

a processing core, the processing core having access to memory which includes antenna optimization instructions, wherein the antenna optimization instructions are made accessible via an IP address and include information which enables a consumer of the RFID reader to determine optimal parameters for an antenna that enables the RFID reader to reader RFID transponders; and
a processor configured to execute the antenna optimization instructions.

**7.** The reader of claim 6, wherein the consumer accesses the antenna optimization instructions via a web server running in the processing core of the reader.

**8.** The reader of claim 7, wherein the web server is responsive to html requests and comprises a script for generating responses to such html requests.

Fig. 1

FIG.2

**Fig. 3**

**Fig. 4**

**Fig. 5**

**Fig. 6**

**Fig. 7**

**Fig. 8**

EP 2 458 673 A2

**Fig. 9**

16

Power Up Reader — 1004

Determine IP Address Of Web Server In Reader Core — 1008

Input Determined IP Address Into Web Browser — 1012

Interact With Antenna Calculation Tool Via Web Browser — 1016

Receive Instructions To Measure Antenna Properties — 1020

Provide Measurement Results As Input To Antenna Calculation Tool — 1024

Receive Tuning Network Optimization Parameters — 1028

Implement Optimized Tuning Network — 1032

*Fig. 10*

Deliver Reader With Driver For
Computing Device — 1104

↓

Cause Reader To Emulate Mass
Storage Device — 1108

↓

Establish Connection Between
Reader And Computing Device — 1112

↓

Cause Reader To Install Driver On
Computing Device — 1116

↓

Determine Driver Installation Is
Complete — 1120

↓

Switch Function Of Reader To
Normal Function — 1124

*Fig. 11*

EP 2 458 673 A2

| HID | VERICLASS™ READER MANAGEMENT | POWER 45: 0 DAYS, 01:28:17<br>EXTERNAL RESET: 0 DAYS, 00:02:05 |

| GENERAL OVERVIEW | READER INFORMATION | CONTACTLESS STATUS | CONTACT SLOTS STATUS | SYSTEM CONFIGURATION | CONTACTLESS CONFIG | CONTACT CONFIG | SYSTEM CONTROL | ANTENNA CALCULATIONS |

EQUATIONS IN THIS SECTION ARE PRESENTED TO HELP YOU DESIGN EFFICIENT ANTENNAE FOR VERICLASS PLATFORM. HAPPY TUNING!

**ANTENNA QUALITY FACTOR CALCULATIONS:**

[ HELP ]

ENTER ANTENNA INDUCTANCE(La): 1.7 $10^{-6}$uH

ENTER ANTENNA SERIAL RESISTANCE(Ra): 1.5 $\Omega$

PARALLEL DUMPING RESISTANCE(Rp): 6368.0 $\Omega$ [ COMPUTE (IDEAL) RESISTOR FOR Q-30 ]

QUALITY FACTOR(Q): 30.0 [ COMPUTE Q FOR GIVEN RESISTOR ]

**ANTENNA TUNING CALCULATION:**

[ HELP ]

VIP3300A00 VERICLASS READER CORE

TUNING NETWORK — ANTENNA

ATX — Cs — Ra

Cp — Rp — La

AGND

SERIAL CAPACITOR: 25.326574 pf
PARALLEL CAPACITOR: 55.991032 pf
[ CALCULATE CAPACITORS ]

FIG.12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7439860 B, Andresky

- US 7439862 B, Quan